# EUROPÄISCHE PATENTANMELDUNG

(11) **EP 1 921 720 A1**
(43) Veröffentlichungstag der Anmeldung: **14.05.2008**
(21) Anmeldenummer: 07021166.9
(22) Anmeldetag: 30.10.2007
(51) Int. Cl.: H01S 3/092, H01S 3/131

(54) **Vorpuls-Pumplichtregelung eines lampengepumpten Lasers**

(30) Priorität: 08.11.2006 DE 102006052582
(71) Anmelder: TRUMPF Laser GmbH + Co. KG, 78713 Schramberg (DE)
(72) Erfinder: Walter, Martin, 78736 Epfendorf (DE); Flaig, Rainer Achim, 78664 Eschbronn (DE)
(74) Vertreter: Kohler Schmid Möbus

(57) **Zusammenfassung**

Ein lampengepumpter Laser (1) mit einer Blitzlampe (5) zum optischen Pumpen eines Laserstabs (4) weist erfindungsgemäß einen die optische Pumpleistung der Blitzlampe (5) erfassenden Sensor (7) und eine Regeleinheit (10) auf, welche die elektrische Leistung der Blitzlampe (5) anhand der erfassten optischen Pumpleistung entsprechend einem vorgegebenen Anstiegsverlauf der optischen Pumpleistung hochfährt. Anhand ihrer erfassten optischen Pumpleistung wird die elektrische Leistung der Blitzlampe (5) entsprechend dem vorgegebenen Anstiegsverlauf der optischen Pumpleistung geregelt hochgefahren.
Nach Erreichen der Laserschwelle wird die elektrische Leistung der Pumplichtquelle (5) anhand der Leistung des Laserstrahls (9) geregelt.

## Beschreibung

Die vorliegende Erfindung betrifft ein Verfahren zum elektrischen Ansteuern einer Pumplichtquelle, insbesondere Blitzlampe, eines lampengepumpten Lasers, wobei die elektrische Leistung der Pumplichtquelle bis mindestens zu der zum Auslösen eines Laserpulses erforderlichen Laserschwelle der optischen Pumpleistung hochgefahren wird, sowie einen zum Durchführen dieses Verfahrens geeigneten lampengepumpten Laser mit einer Pumplichtquelle, insbesondere Blitzlampe, zum optischen Pumpen eines Lasermediums/-kristalls.

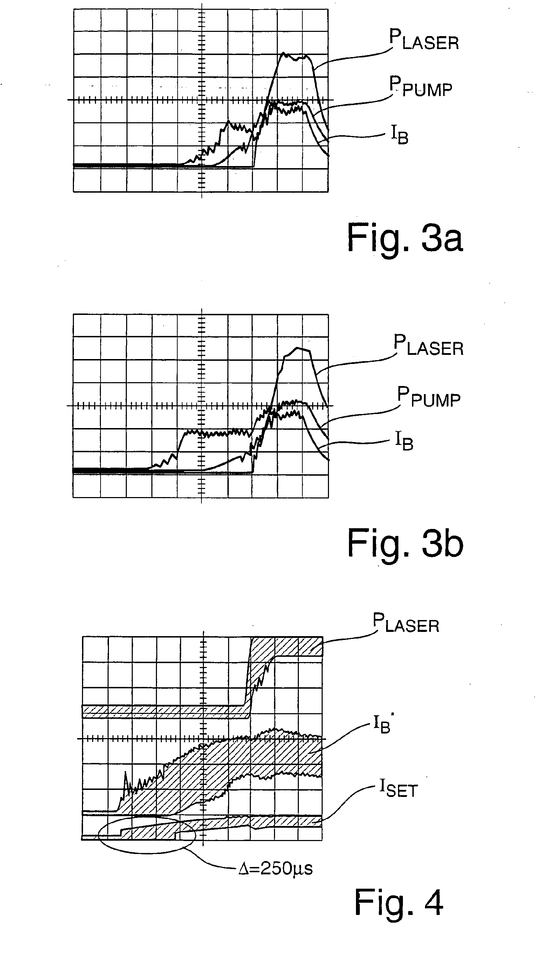

Im Kurzpulsbereich (<0,5 ms) weisen Blitzlampen ein instabiles Verhalten auf, d.h., eine Korrelation zwischen ausgesendetem Pumplicht und Lampenstrom, -spannung oder elektrischer Pumpleistung ist nur eingeschränkt möglich. Die Unterscheidung zwischen stabilem und instabilem Lampenverhalten beruht dabei primär auf dem spezifischen Einschwingverhalten. **Fign. 3a und 3b** verdeutlichen dies anhand zweier Oszilloskopaufzeichnungen einer bekannten Vorpulssteuerung über den Lampenstrom, mit der der Laser bisher an die Laserschwelle geführt wurde. In Fign. 3a und 3b sind die Laserlichtleistung P_{Laser}, die Pumplichtleistung P_{Pump} und der Blitzlampenstrom I_{B} bzw. die Stromvorgabe I_{SET} (Fig. 4) für die stromgesteuerte Lampenstromquelle dargestellt. Der Blitzlampenstrom I_{B} wird über eine gerampte Stromvorgabe an der Blitzlampenstromquelle stromgesteuert. Bei gleichen Parametern für Pulsdauer und Pulsleistung zeigt Fig. 3a einen schnelleren Anstieg der Pumplichtleistung auf das Auslöseniveau des Lasers (Laserschwelle), während dieser Anstieg in Fig. 3b langsamer erfolgt. Im Unterschied zu Fig. 3b ist in Fig. 3a der noch nicht eingeschwungene erste Puls einer Pulsfolge gezeigt, während in Fig. 3b der eingeschwungene Zustand erreicht wurde. Wie in **Fig. 4** für eine Vielzahl von übereinander gezeigten Oszilloskopaufzeichnungen gezeigt ist, führt dieser unterschiedliche Anstieg der Pumplichtleistung zu einem Auslösejitter Δ von ca. 250µs, wobei alle Oszilloskopaufzeichnungen auf einen gemeinsamen Laserpulsbeginn verschoben (getriggert) dargestellt sind. Als Jitter Δ wird eine zeitliche Schwankung/Ungenauigkeit in einem getakteten Prozess bezeichnet, d.h., im Kurzpulsbereich werden die Laserpulse nicht in gleichen Abständen ausgelöst, sondern es kommt zu Verzögerungen oder auch zu frühzeitiger Auslösung. Bei Blitzlampen mit instabilem Einschwingverhalten jittert die Pulsauslösung, da die Zeitdauer schwankt, bis die optische Pumpleistung die Laserschwelle erreicht hat.

Bei stabilem Blitzlampenverhalten ist diese bekannte Steuerung des Vorpulses über den Lampenstrom zur Auslösung kurzer Laserpulse nahezu jitterfrei. Diese Blitzlampen mit stabilem Einschwingverhalten haben jedoch eine vergleichsweise geringe Lebensdauer.

Demgegenüber ist es die Aufgabe der vorliegenden Erfindung, eine Regelung zur Auslösung von Laserpulsen, insbesondere im Kurzpulsbereich, für die Jitterreduzierung, insbesondere bei Verwendung von Blitzlampen mit instabilem Verhalten, anzugeben und einen entsprechenden lampengepumpten Laser bereitzustellen.

Diese Aufgabe wird erfindungsgemäßen bei dem eingangs genannten Verfahren dadurch gelöst, dass die Pumpleistung der Pumplichtquelle erfasst wird und dass anhand der erfassten Pumpleistung die elektrische Leistung der Pumplichtquelle entsprechend einem vorgegebenen Anstiegsverlauf der optischen Pumpleistung geregelt hochgefahren wird. Vorzugsweise wird die Pumpleistung der Pumplichtquelle optisch erfasst.

Erfindungsgemäß wird das Pumplicht, ggf. unter Berücksichtigung weiterer Vergleichsgrößen (z.B. Ist/Soll-Abgleich), geregelt an die Laserschwelle geführt. Durch diese optische Vorpuls-Pumplichtregelung lassen sich gegenüber der bekannten stromgesteuerten Vorpulssteuerung das Auslösejitter und folglich auch die Vorpulsdauer deutlich reduzieren. Mit anderen Worten wird das Einschwingverhalten von Blitzlampen ausgeregelt, wodurch eine jitterreduzierte und beschleunigte Auslösung von Laserpulsen ermöglicht wird. Aufgrund der optischen Pumplichtregelung spielt das Einschwingverhalten eine untergeordnete Rolle, so dass Blitzlampen höherer Lebensdauer eingesetzt werden können.

Die erfindungsgemäße optische Pumplichtregelung hat insbesondere bei Verwendung von Blitzlampen folgende Vorteile:
- Auslösejitter lässt sich auf ein Minimum reduzieren (≤50µs).
- Vorpulsdauer lässt sich um mindestens 30% reduzieren, d.h., die entsprechenden Lasergeräte können mit einer höheren Maximalfrequenz betrieben werden.
- Einschwingverhalten spielt bei Lampenauswahl eine untergeordnete Rolle, d.h., Lampen können auf Lebensdauer optimiert werden.
- Kurze Pulse können besser geregelt werden, da beim Lasereinsatz eine definierte Pumpleistung vorliegt.

Bevorzugt wird die optische Pumpleistung der Pumplichtquelle außerhalb des Laserresonators erfasst. Der vorgegebene Anstiegsverlauf der optischen

Pumpleistung kann eine beliebige Kurvenform haben, beispielsweise eine bis zur Laserschwelle ansteigende Rampe sein.

Besonders bevorzugt wird nach Erreichen der Laserschwelle die elektrische Leistung der Pumplichtquelle anhand der Laserleistung geregelt, also nach Erreichen der Laserschwelle von optischer Vorpulsregelung auf insbesondere optische Laserleistungsregelung gewechselt. Vorteilhaft wird die Pumpleistung der Pumplichtquelle auch nach Erreichen der Laserschwelle weiter erfasst, so dass mit Beginn der Laserleistungsregelung das Pumplichtsignal für Diagnosezwecke verwendet werden kann. Mit beispielsweise einer integralen Erfassung des Pumplichtsignals während des Laserpulses kann die gemessene "Pumplichtenergie" mit der gemessenen Laserenergie in Relation gesetzt werden, um die Effizienz des Laseraufbaus und mögliche Alterungseffekte, Dejustage etc. zu bestimmen. Die Photodiode für die Pumplichterfassung sollte hierbei mit einem spektralen Filter versehen sein, damit nur Pumplichtanteile und keine Laserleistunganteile (HR-Spiegel hat in der Praxis eine begrenzte Reflektivität) mitgemessen werden.

Die Erfindung betrifft auch einen lampengepumpten Laser mit einer Pumplichtquelle, insbesondere Blitzlampe, zum optischen Pumpen eines Lasermediums, der erfindungsgemäß einen die optische Pumpleistung der Pumplichtquelle erfassenden Sensor (z.B. Photodiode) und eine Regeleinheit aufweist, welche die elektrische Leistung der Pumplichtquelle anhand der erfassten Pumpleistung entsprechend einem vorgegebenen Anstiegsverlauf der optischen Pumpleistung hochfährt. Bei der Vorpulsregelung muss die Erfassung nicht hochpräzise erfolgen, da über diesen Sensor keine Laserleistungsregelung erfolgt. Bei einem Abgleich Laserleistung/Pumpleistung sollte die Messung, z.B. durch die Verwendung eines Spektralfilters, präzisiert werden.

Vorzugsweise ist der Sensor außerhalb des Resonators vorgesehen, und zwar insbesondere hinter dem hochreflektierenden Resonatorspiegel (HR-Spiegel), da dies folgende Vorteile bietet:
- Einfache und gute Erfassung der Pumplichtleistung am HR-Spiegel.
- Integrale Erfassung des im Laserstab gestreuten Pumplichts, so dass über eine Betrachtung des insgesamt gestreuten Lichts lokale Effekte vernachlässigt werden.
- Der HR-Spiegel ist für das Pumplicht weitestgehend transparent, wodurch keine Strahlteiler oder Vergleichbares erforderlich sind.
Prinzipiell kann der Sensor auch direkt an der Blitzlampe oder im Resonator angeordnet sein.

Bevorzugt weist der lampengepumpte Laser einen die Leistung des Laserstrahls erfassenden Laserleistuhgsmessäufnehmer auf, um das Erreichen der Laserschwelle zu detektieren und dann anschließend den Laser über diesen Laserleistungsmessaufnehmer zu regeln. Der Lasermessaufnehmer kann entweder außerhalb des Laserresonators zum Erfassen der Leistung des ausgekoppelten Strahls oder innerhalb des Laserresonators angeordnet sein. Der Sensor und der Laserleistungsmessaufnehmer können weiterhin an verschiedenen Messorten oder am gleichen Messort positioniert sein.

Vorteilhaft ist weiterhin eine Auswerteeinheit vorgesehen, die die Signale des Sensors und des Lasermessaufnehmers auswertet. Anhand dieser parallelen Laser- und Pumplichtmessung können beispielsweise die Effizienz des Laseraufbaus und mögliche Alterungseffekte, Dejustage etc. erkannt werden.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: den erfindungsgemäßen lampengepumpten Laser mit einer optischen Vorpuls-Pumplichtregelung;
- Fig. 2: eine Vielzahl von übereinander gelegten Oszilloskopaufzeichnungen der erfindungsgemäßen Vorpuls-Pumplichtregelung, jeweils getriggert auf den Auslösezeitpunkt;
- Fig. 3: zwei Oszilloskopaufzeichnungen einer bekannten stromgesteuerten Vorpulssteuerung des Lampenstroms im nicht eingeschwungenen Zustand (Fig. 3a) und im eingeschwungenen Zustand (Fig. 3b); und
- Fig. 4: eine Vielzahl der in Fig. 3 gezeigten Oszilloskopaufzeichnungen, jeweils übereinander gelegt und getriggert auf den Auslösezeitpunkt.

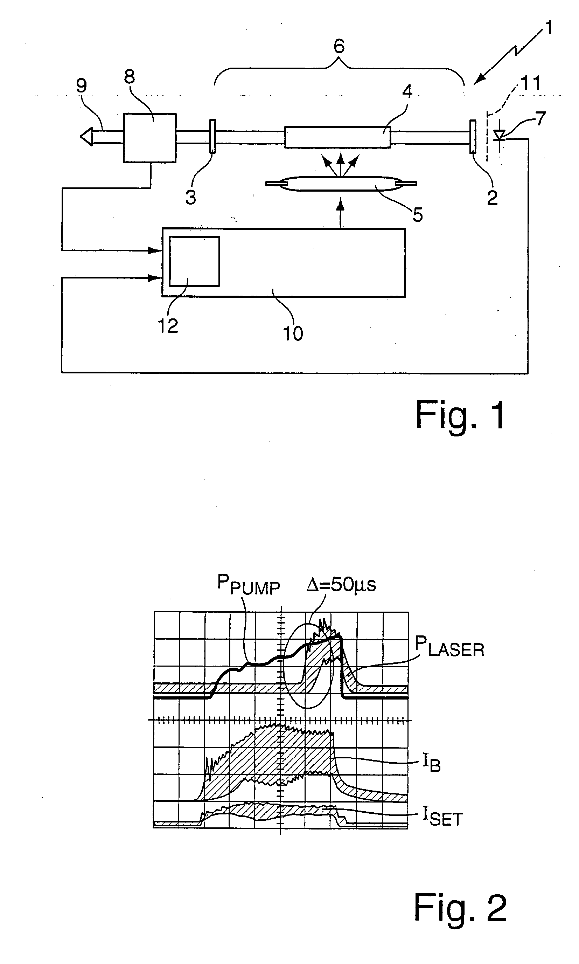

Der in **Fig. 1** gezeigte lampengepumpte Laser **1** weist zwischen einem hochreflektierenden Rückspiegel (HR-Spiegel) **2** und einem teilreflektierenden Auskoppelspiegel **3** ein hier beispielhaft als Laserstab ausgebildetes Lasermedium **4** (z.B. aus Nd:YAG, Nd:YVO₄ etc.) auf, das mantelseitig mittels einer Blitzlampe **5** optisch gepumpt wird. Außerhalb des durch die beiden Spiegel 2, 3 definierten Laserresonators **6,** genauer gesagt hinter dem HR-Spiegel 2, ist eine Photodiode **7** zum Erfassen der optischen Pumpleistung der Blitzlampe 5 vorgesehen. Außerhalb des Laserresonators 6 ist ein Lasermessaufnehmer **8** zum Messen der Leistung des aus dem Laserresonator 6 ausgekoppelten Laserstrahls **9** vorgesehen. Die Ausgangssignale der Photodiode 7 und des Lasermessaufnehmers 8 werden einer Regeleinheit **10** zugeführt, welche die Blitzlampe 5 anhand dieser Ausgangssignale wie folgt angesteuert:
Die optische Pumpleistung der Blitzlampe 5 wird über die Photodiode 7 erfasst und an die Regeleinheit 10 weitergegeben, die ggf. unter Berücksichtigung weiterer Vergleichsgrößen (z.B. Ist/Soll-Abgleich) die Blitzlampe 5 ansteuert. Die Regeleinheit 10 fährt die elektrische Leistung der Blitzlampe 5 anhand der erfassten optischen Pumpleistung entsprechend einem vorgegebenen Anstiegsverlauf der optischen Pumpleistung geregelt an die Laserschwelle hoch. Das Erreichen der Laserschwelle wird vom Lasermessaufnehmer 8 detektiert. Die Regelung des Lasers 1 erfolgt dann anschließend über diesen Lasermessaufnehmer 8, also Wechsel von optischer Vorpulsregelung auf Laserleistungsregelung nach Erreichen der Laserschwelle.

Wie gestrichelt angedeutet, kann der Photodiode 7 ein spektraler Filter **11** vorgeschaltet sein, damit nur Pumplichtanteile und keine Laserleistunganteile mitgemessen werden. Weiterhin kann noch eine Auswerteeinheit **12** vorgesehen, die die Signale der Photodiode 7 und des Lasermessaufnehmers 8 auswertet. Anhand dieser parallelen Laser- und Pumplichtmessung können beispielsweise die Effizienz des Laseraufbaus und mögliche Alterungseffekte, Dejustage etc. erkannt werden.

**Fig. 2** zeigt eine Vielzahl von übereinander gezeigten Oszilloskopaufzeichnungen dieser Vorpuls-Pumplichtregelung, die alle auf einen gemeinsamen Laserpulsbeginn verschoben (getriggert) dargestellt sind. In Fig. 2 sind die Laserlichtleistung P_{Laser}, die rampenförmige Pumplichtleistungsvorgabe P_{Pump}, der Blitzlampenstrom I_{B} und die zugehörige Stromvorgabe I_{SET} für die stromgesteuerte Lampenstromquelle dargestellt. Durch die optische Vorpuls-Pumplichtregelung ist das Auslösejitter Δ auf ca. 50µs reduziert, so dass das Einschwingverhalten eine untergeordnete Rolle spielt und Blitzlampen höherer Lebensdauer eingesetzt werden können.

## Patentansprüche

1. Verfahren zum elektrischen Ansteuern einer Pumplichtquelle (5), insbesondere Blitzlampe, eines lampengepumpten Lasers (1), wobei die elektrische Leistung der Pumplichtquelle (5) bis mindestens zu der zum Auslösen eines Laserpulses erforderlichen Laserschwelle der optischen Pumpleistung hochgefahren wird,
**dadurch gekennzeichnet,**
**dass** die Pumpleistung der Pumplichtquelle (5) erfasst wird und dass anhand der erfassten Pumpleistung die elektrische Leistung der Pumplichtquelle (5) entsprechend einem vorgegebenen Anstiegsverlauf der optischen Pumpleistung geregelt hochgefahren wird.

2. Verfahren nach Anspruch 1, **dadurch gekennzeichnet, dass** die Pumpleistung der Pumplichtquelle (5) optisch erfasst wird.

3. Verfahren nach Anspruch 1 oder 2, **dadurch gekennzeichnet, dass** die Pumpleistung der Pumplichtquelle (5) außerhalb des Laserresonators (6) erfasst wird.

4. Verfahren nach einem der vorherigen Ansprüche, **dadurch gekennzeichnet, dass** der vorgegebene Anstiegsverlauf der Pumpleistung eine bis zur Laserschwelle ansteigende Rampe ist.

5. Verfahren nach einem der vorhergehenden Ansprüche, **dadurch gekennzeichnet, dass** nach Erreichen der Laserschwelle die elektrische Leistung der Pumplichtquelle (5) anhand der Leistung des Laserstrahls (9) geregelt wird.

6. Verfahren nach einem der vorhergehenden Ansprüche, **dadurch gekennzeichnet, dass** die Pumpleistung der Pumplichtquelle (5) auch nach Erreichen der Laserschwelle weiter erfasst wird.

7. Lampengepumpter Laser (1) mit einer Pumplichtquelle (5), insbesondere Blitzlampe, zum optischen Pumpen eines Laserstabs (4), **gekennzeichnet durch**:
- einen die Pumpleistung der Pumplichtquelle (5) erfassenden Sensor (7), und
- eine Regeleinheit (10), welche die elektrische Leistung der Pumplichtquelle (5) anhand der erfassten Pumpleistung entsprechend einem vorgegebenen Anstiegsverlauf der optischen Pumpleistung hochfährt.

8. Laser nach Anspruch 7, **dadurch gekennzeichnet, dass** der Sensor (7) zur optischen Erfassung der Pumpleistung ausgelegt ist.

9. Laser nach Anspruch 7 oder 8, **dadurch gekennzeichnet, dass** der Sensor (7) außerhalb des Resonators (6), insbesondere hinter dem HR-Spiegel (2), vorgesehen ist.

10. Laser nach einem der Ansprüche 7 bis 9, **dadurch gekennzeichnet, dass** vor dem Sensor (7) ein spektraler Filter (11) angeordnet ist, der nur das Pumplicht durchlässt.

11. Laser nach einem der Ansprüche 7 bis 10, **dadurch gekennzeichnet, dass** die Regeleinheit (10) einen Lasermessaufnehmer (8) aufweist, der die Leistung des Laserstrahls (9) erfasst.

12. Laser nach Anspruch 11, **gekennzeichnet durch** eine Auswerteeinheit (12), die die Signale des Sensors (7) und des Lasermessaufnehmers (8) auswertet.
